# EUROPEAN PATENT SPECIFICATION

(11) **EP 1 868 846 B1**
(45) Date of publication and mention of the grant of the patent: **30.07.2008**
(21) Application number: 05735044.9
(22) Date of filing: 25.03.2005
(51) Int. Cl.: B60R 1/02

(54) **DEVICE FOR ORIENTING THE EXTERNAL REAR-VIEW MIRRORS OF A VEHICLE TO AVOID THE MOMENT OF DEAD ANGLE.**
VORRICHTUNG ZUM AUSRICHTEN DER RÜCKAUSSENSPIEGEL EINES FAHRZEUGS ZUM VERMEIDEN DES TOTWINKELMOMENTS
DISPOSITIF POUR VEHICULES A MOTEUR CONCU POUR AVERTIR A TEMPS D'UN VEHICULE EFFECUTANT UN DEPASSEMENT ET POUR ORIENTER LES RETROVISEURS EXTERNES AFIN D'EVITER LE MOMENT DE L'ANGLE MORT

(30) Priority: 21.03.2005 IT MI20050458
(43) Date of publication of application: 26.12.2007
(73) Proprietor: Serra, Alessandro, 20060 Trezzano Rosa (IT)
(72) Inventor: Serra, Alessandro, 20060 Trezzano Rosa (IT)
(74) Representative: Mocchetti, Ilio G.
(86) International application number: PCT/IT2005/000169
(87) International publication number: WO 2006/100704

(56) References cited:
- US-A- 5 339 075
- US-A- 6 116 742
- US-B1- 6 193 380
- US-B1- 6 452 533
- PATENT ABSTRACTS OF JAPAN vol. 010, no. 115 (M-474), 30 April 1986 (1986-04-30) & JP 60 244642 A (NIPPON DENSO KK), 4 December 1985 (1985-12-04)

## Description

The invention concerns the rear-view mirrors placed externally on motor vehicles.

These mirrors provide a safety means enabling the driver to gain a full view of what is happening behind and at the sides of his vehicle in traffic, the speeds and positions of which are continuously changing, and which therefore constitute a potential source of some considerable danger.

It is well known e.g. from document US 6,116,742, that, when an overtaking vehicle comes alongside the vehicle it is intending to pass, a dead angle occurs in the view provided to the driver of the slower vehicle by his externally mounted rear-view mirrors, just at the moment of greatest risk when the faster vehicle is accelerating to pass the slower one and the two vehicles are at the point when one arrives alongside the other.

The above invention solves this problem by simple and effective means as will be explained below.

Subject of the invention is a device for motor vehicles said device comprising an electronic unit and radio tachometer that, by means of a specially devised circuit and when the speed of the overtaking vehicle shows that its driver intends to pass the slower vehicle on the left or on the right, puts into operation one of a pair of acoustic warning means mounted inside the slower vehicle on the right and on the left, and also orientates the positions of the externally mounted left or right-hand rear-view mirrors so that, while being overtaken, the driver is able to see the vehicle approaching from behind, in this way avoiding the dead angle moment that occurs with the external rear-view mirrors at present in use.

In one type of execution the radio tachometer is connected to an antenna mounted centrally on the rear of the motor vehicle.

In another type of execution the radio tachometer is connected to two antennas respectively mounted at the right and left on the rear of the motor vehicle.

The electronic unit and radio tachometer are housed inside the motor vehicle in a recess closed by a door inside a slot in the dashboard, and is electrically wired both to the acoustic warning means on the right and left and to the devices that respectively operate the right and left-hand rear-view mirrors, and also to the antennas mounted at right and left on the rear of the motor vehicle.

Four knobs are placed on the door closing the recess in the dashboard for the electronic unit and radio tachometer, the first knob being used to adjust the electronic circuit that estimates the speed of a vehicle approaching from behind, the second and third knobs being used to adjust rotation of one or other of the rear-view mirrors while the slower vehicle is being overtaken, and the fourth knob being used to regulate pulses sent to the generators of acoustic warnings.

When the overtaking vehicle has passed on, or when still behind but travelling at a speed showing that its driver does not intend to overtake, the electronic unit in the radio tachometer cuts out the acoustic warning means and returns the rear-view mirrors to their initial positions.

In one type of execution the rear-view mirrors comprise a first part joined to the presently-known devices for spatial orientation, and a second part, movable in relation to the first part and connected to the electronic unit and radio tachometer to produce the phenomena described above if another vehicle approaches from behind with intention to overtake the one in front of it.

The invention offers evident advantages.

The acoustic warning announcing a probable overtake and the automatic rotation of the left or right hand rear-view mirrors on the vehicle being overtaken, enable its driver to maintain a view of the vehicle approaching from behind and the relative positions of the two, and act accordingly to avoid any danger.

In view of the simplicity of the apparatus described, and of the enormous advantages consequent upon avoidance of one of the main causes of accidents that occur on the roads today, so often due to one vehicle overtaking another or attempting to do so, the invented device could be universally adopted with great advantage.

Characteristics and purposes of the invention will be made still clearer by the following example of its execution illustrated by diagrammatically drawn figures.

### Plate I

Fig. 1 Motor vehicle with external rear-view mirrors in the normal position, perspective.

### Plate II

Fig. 2 The vehicle with its left rear-view mirror automatically turned to avoid the dead angle, and another vehicle approaching from behind to overtake it, from above with enlarged detail of the rear-view mirror as seen by the driver.

### Plate III

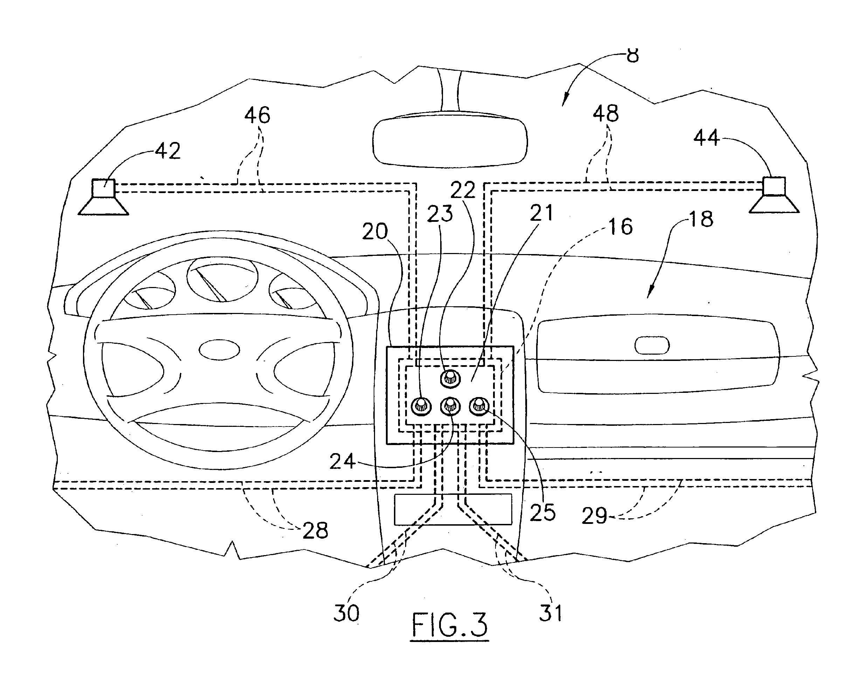

Fig. 3 Dashboard of the motor vehicle onto which the rear-view mirrors, subject of the invention, are mounted, front view.

The motor vehicle 8 presents the external rear-view mirrors 10 left and 12 right mounted on brackets 13, said mirrors being substantially the same as the types already known but connected to devices 14 and 15 that turn the mirror concerned to avoid the dead angle when said vehicle 8 is being overtaken by the faster vehicle 40, as will be explained below.

The slot 20 in the dashboard 18 of the vehicle 8 contains an electronic unit 16 comprising a radio tachometer connected by electrical wiring 28 and 29 to devices 14 and 15 respectively, by wiring 30 and 31 to the radio tachometer's antennas 26 and 27 respectively mounted in positions on the left and right of the rear 36 of the vehicle 8, and by wiring 46 and 48 to the acoustic warning means 42 and 44 mounted on the left and on the right inside the vehicle 8.

The radio tachometer as usual comprises an electronic circuit that makes real time comparisons between the speed of the vehicle on which it is installed, and that of the vehicle arriving from behind, such as vehicle 40.

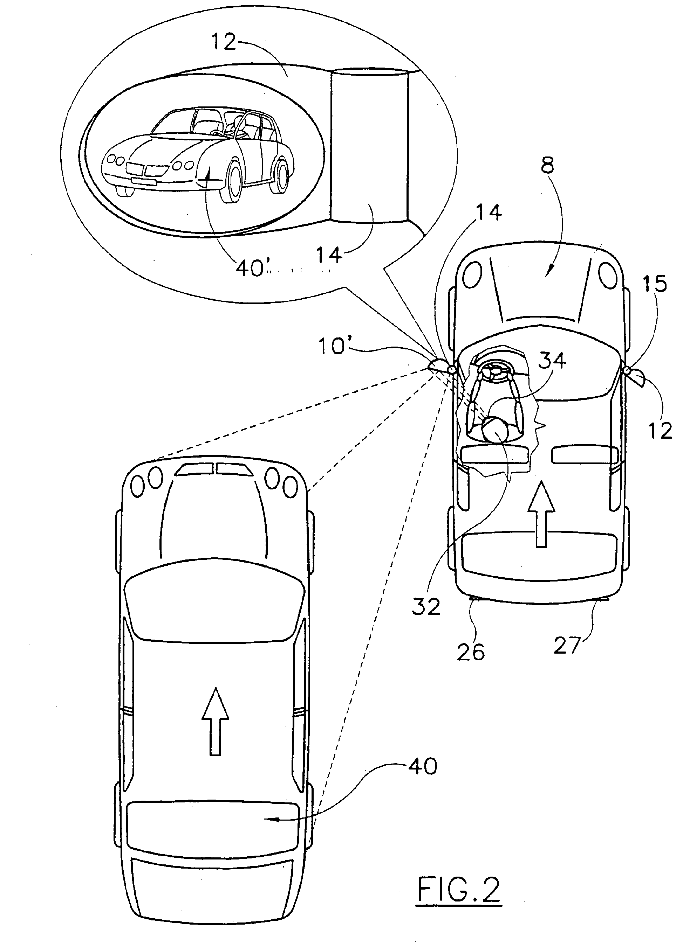

The speed of an overtaking vehicle must necessarily exceed that of the vehicle being overtaken so that when, by means of antennas 26 and 27, the radio tachometer notes this difference in speeds, the electronic unit 16 determines, by means of devices 14 and 15, rotation of the rear-view mirrors 10 and 12 on vehicle 8 so that the image 40' (Figure 2) of the overtaking vehicle 40 remains visible in the rear-view mirrors 10 and 12, as shown in Figure 2, the eyes 34 of the driver 32 being able to check in the left hand rear-view mirror 10, then turned as far as 10', the position of said vehicle 40 overtaking on the left, in relation to his own vehicle 8, any dead angle being therefore avoided.

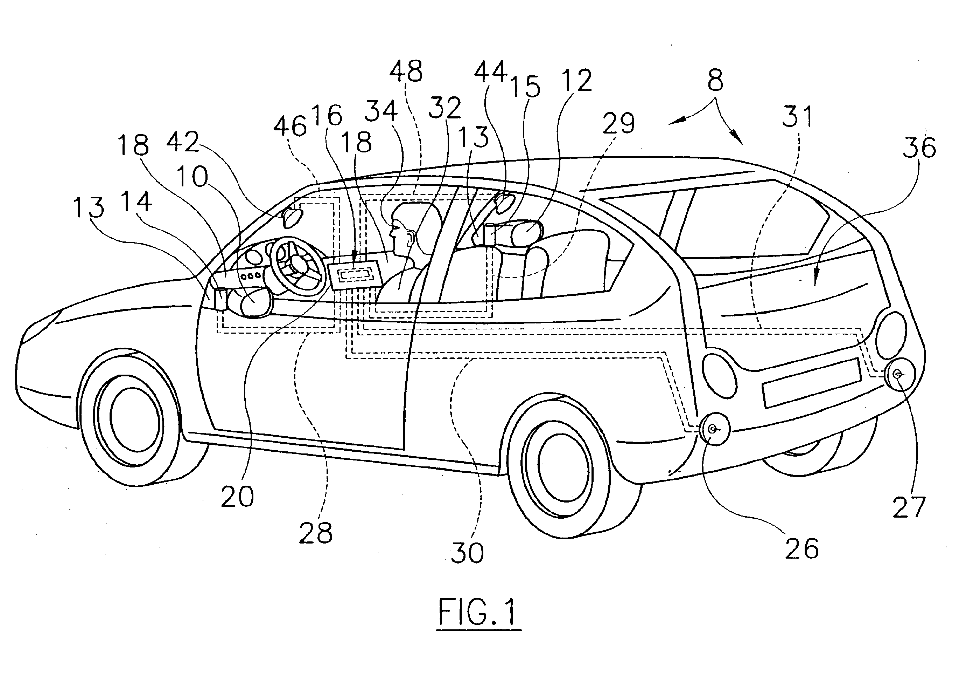

The electronic unit 16 also operates one or other of the acoustic warnings 42 and 44 mounted on the left and on the right inside vehicle 8 (Figure 1) according to whether the faster vehicle 40 is overtaking vehicle 8 on the left or on the right.

When the faster vehicle has overtaken the slower one, or when the speed of vehicle 40 is such as to exclude the intention to overtake, the electronic unit 16 turns off the acoustic warning means and automatically returns the rear-view mirrors 10 and 12 to their initial positions.

## Claims

1. Device for motor vehicles comprising an electronic unit which, by means of devices, rotates one or other of the external rear-view mirrors mounted respectively on the right and left in such a way that the eyes of the driver in the slower vehicle can continue to see the overtaking vehicle, thus avoiding the dead angle that is created by the rear-view mirrors at present in use, **characterized in that** the electronic unit comprises a radio tachometer that puts into operation, when the speed of a vehicle approaching from behind in relation to that of a slower vehicle is such that said latter vehicle will presumably be overtaken on the left or on the right, one or other of two acoustic warning means mounted respectively on the left and on the right inside the slower vehicle.

2. Device for motor vehicles as in claim 1,
**characterized in that** the radio tachometer is wired to an antenna mounted in a central position on the rear of the motor vehicle.

3. Device for motor vehicles as in claim 1,
**characterized in that** the radio tachometer is connected to two antennas mounted respectively at the left and at the right on the rear of the motor vehicle.

4. Device for motor vehicles as in claim 1,
**characterized in that** the electronic unit with radio tachometer is placed inside a recess, closed by a door, in the dashboard and is connected by electrical wiring to the acoustic warning means mounted inside the vehicle respectively on the left and right, is also wired to the devices that cause the left or the right hand rear-view mirrors to rotate if a faster vehicle is approaching to overtake, and is also wired to the antennas mounted respectively at the left and at the right on the back of the motor vehicle.

5. Device for motor vehicles as in claims 1 and 4,
**characterized in that** four knobs are mounted on the door of the recess in the dashboard holding the electronic unit and tachometer, the first knob being used to adjust the electronic circuit and estimate the difference in speed of a motor vehicle approaching from behind and that of a slower vehicle preceding it, the second and third knobs respectively being used to adjust rotation of one or other of the rear-view mirrors while overtaking is in progress, and the fourth knob being used to regulate pulses to the generators for the acoustic warning means mounted on the left and on the right as described.

6. Device for motor vehicles as in claims 1 and 4,
**characterized in that**, when overtaking by the faster vehicle has been completed, or if the speed of said vehicle shows that it no longer intends to overtake the vehicle in front of it, the electronic unit of the radio tachometer cuts off the acoustic warnings and, by means of the respective special devices referred to above, returns the rear-view mirrors to their initial positions.

7. Device for motor vehicles as in claim 1,
**characterized in that** the externally mounted rear-view mirrors comprise a first part joined to the presently known devices for spatial orientation, and a second part, moveable in relation to said first part and connected to the electronic unit comprising the radio tachometer, to cause the rear-view mirrors to rotate, when another vehicle is approaching to overtake, thus avoiding the dead angle moment as described above.

## Patentansprüche

1. Vorrichtung für Kraftfahrzeuge
die einen Elektronikkomplex umfaßt, der mittels dafür vorgesehenen Mechanismen, die Drehung des jeweils linken oder rechten Außenspiegels verursacht. Dies ermöglicht dem Fahrer, das überholende Fahrzeug zu sichten, wobei jeglicher tote Winkel der gängigen Außenspiegel vermieden wird, **dadurch gekennzeichnet, daß** der Elektronikkomplex ein Funk-Tachometer umfaßt, das bei einer relativen Geschwindigkeit zwischen einem sich nähernden Fahrzeug und dem eigenen Fahrzeug, die eine Links-oder Rechtsüberholung vermuten läßt, das akustische Warnsignal auf der jeweils linken oder rechten Seite im Inneren des Fahrzeugs auslöst.

2. Vorrichtung für Kraftfahrzeuge nach Anspruch 1),
**dadurch gekennzeichnet, daß** das Funk-Tachometer mit einer Antenne verbunden ist, welche an der Mitte der Rückwand des Fahrzeugs befestigt ist.

3. Vorrichtung für Kraftfahrzeuge 8 nach Anspruch 1),
**dadurch gekennzeichnet, daß** das Funk-Tachometer mit zwei Antennen verbunden ist, die jeweils an der linken und rechten Seite der Rückwand des Fahrzeugs befestigt sind.

4. Vorrichtung für Kraftfahrzeuge nach Anspruch 1),
**dadurch gekennzeichnet, daß** sich der Elektronikkomplex mit Funk-Tachometer in einem Innenfach mit Sichtblende des Armaturenbretts befindet und mittels Kabeln mit den jeweils links und rechts positionierten akustischen Signalgebern, mittels Kabeln mit den Vorrichtungen, die im Falle eines Überholungsmanövers die Drehung des jeweils linken oder rechten Außenspiegels auslösen, sowie mittels Kabeln mit den an der Rückseite des Fahrzeugs jeweils links und rechts befestigten Antennen verbunden ist.

5. Vorrichtung für Kraftfahrzeuge nach Anspruch 1) und 4),
**dadurch gekennzeichnet, daß** an der Sichtblende des im Armaturenbrett positionierten Innenfachs, in dem sich der Elektronikkomplex mit Funk-Tachometer befindet, vier Drehregler befestigt sind. Davon ermöglicht der erste die Steuerung des Stromkreises, die den relativen Geschwindigkeitsunterschied zwischen einem sich nähernden Fahrzeug und dem eigenen mißt; der zweite und dritte dient zur Einstellung der Drehung des einen oder anderen Außenspiegels während des Überholvorgangs; der vierte dient der Einstellung der Impulse, die an die akustischen Signalgeber auf der linken und rechten Seite gesendet werden.

6. Vorrichtung für Kraftfahrzeuge nach Anspruch 1) und 4),
**dadurch gekennzeichnet, daß** wenn ein Fahrzeug das Überholungsmanöver beendet hat oder wenn die relative Geschwindigkeit zwischen diesem Fahrzeug und dem eigenen ein Überholungsmanöver ausschließt, der Elektronikkomplex mit Funk-Tachometer die akustischen Warnsignale einstellt und mittels entsprechenden Vorrichtungen die Außenspiegel wieder in ihre Ausgangsposition bringt.

7. Vorrichtung für Kraftfahrzeuge nach Anspruch 1),
**dadurch gekennzeichnet, daß** diese Außenspiegel aus zwei Teilen bestehen, und zwar aus einem ersten Teil, der mit den gängigen Verstellungsvorrichtungen verbunden ist, und einen zweiten verstellbaren Teil, der mit dem Elektronikkomplex mit Funk-Tachometer verbunden ist und in Fall von einem Überholungsmanöver die Drehung der Außenspiegel auslöst, wobei jeglicher tote Winkel wie oben beschrieben vermieden werden.

## Revendications

1. Dispositif pour véhicules à moteur,
comprenant une unité électronique qui détermine, par des dispositifs, la rotation d'un ou de l'autre miroir rétroviseur extérieur respectivement sur la gauche et sur la droite, en manière de permettre aux yeux du chauffeur du véhicule la vision d'un véhicule en dépassement, en évitant ainsi les angles morts qui se déterminent avec les actuels miroirs rétroviseurs extérieurs,
**caractérisé en ce que** l'unité électronique comprend un radio-tachymètre qui met en fonction, quand la vitesse relative à celle d'un véhicule s'approchant à son propre véhicule est telle de faire présumer le dépassement sur la gauche ou sur la droite, d'un ou de l'autre des deux moyens de signalisation acoustiques, disposés respectivement sur la gauche et sur la droite à l'intérieur du véhicule à moteur.

2. Dispositif pour véhicules à moteur selon la revendication 1,
**caractérisé en ce que** le radio-tachymètre est connecté à une antenne installée au milieu de la paroi arrière du véhicule.

3. Dispositif pour véhicules à moteur selon la revendication 1,
**caractérisé en ce que** le radio-tachymètre est connecté à deux antennes, installées respectivement à la gauche et à la droite de la paroi arrière du véhicule.

4. Dispositif pour véhicules à moteur selon la revendication 1,
**caractérisé en ce que** l'unité électronique avec le radio-tachymètre est installée à l'intérieur d'un logement avec un guichet du tableau des instruments, et est connectée par des câbles électriques respectivement aux moyens de signalisation acoustiques à la gauche et à la droite, et par des câbles électriques aux dispositifs qui déterminent la rotation, en cas d'un dépassement, des miroirs rétroviseurs respectivement à la gauche et à la droite, et par des câbles électriques avec les antennes installées respectivement à la gauche et à la droite sur la paroi arrière du véhicule.

5. Dispositif pour véhicules à moteur selon les revendications 1 et 4,
**caractérisé en ce que** sur le guichet du logement dans le tableau des instruments pour l'unité électronique avec le radio-tachymètre, sont disposées quatre poignées, la première pour permettre le réglage du circuit électronique et l'évaluation de la différence entre les vitesses d'un véhicule à moteur s'approchant de la partie arrière et celle d'un véhicule plus lent précédant, et la deuxième et troisième poignée sont respectivement utilisées pour régler la rotation d'un ou de l'autre miroir rétroviseur pendant la manoeuvre de dépassement, et la quatrième poignée est utilisée pour régler les impulses qui vont aux générateurs pour le moyens de signalisation acoustiques montés à la gauche et à la droite comme décrit avant.

6. Dispositif pour véhicules à moteur selon les revendications 1 et 4,
**caractérisé en ce que**, quand la manoeuvre de dépassement du véhicule plus rapide est terminée, ou si la vitesse du dit véhicule montre qu'il n'entend plus dépasser le véhicule précédant, l'unité électronique du radio-tachymètre provoque une interruption des moyens de signalisation acoustiques et, à l'aide des dispositifs spéciaux correspondants précités, fait retourner les miroirs rétroviseurs arrières à leur positions initiales.

7. Dispositif pour véhicules à moteur selon la revendication 1,
**caractérisé en ce que** les miroirs rétroviseurs montés à l'extérieur comprennent une première partie unie aux dispositifs au présent connus pour une orientation spatiale, et une deuxième partie, avec possibilité de translation en relation à la dite première partie et connectée à l'unité électrique comprenant le radio-tachymètre, en manière de provoquer la rotation des miroirs rétroviseurs arrières, quand un autre véhicule s'approche pour dépasser, en évitant ainsi la création d'un angle mort comme décrit avant.
